# FASCICULE DE BREVET EUROPEEN

(11) **EP 2 999 872 B1**
(45) Date de publication et mention de la délivrance du brevet: **03.08.2022**
(21) Numéro de dépôt: 14729954.9
(22) Date de dépôt: 14.05.2014
(51) Int. Cl.: F02K 9/48, F02K 9/56, F01D 11/06, F01D 25/04

(54) **TURBOPOMPE AVEC SYSTÈME ANTI-VIBRATIONS**
TURBOPUMPE MIT SCHWINGUNGSVERMINDERUNGSSYSTEM
TURBOPUMP WITH ANTI-VIBRATION SYSTEM

(30) Priorité: 20.05.2013 FR 1354511
(43) Date de publication de la demande: 30.03.2016
(73) Titulaire: ArianeGroup SAS, 78130 Les Mureaux (FR)
(72) Inventeur: LE LOUËDEC, Dominique, F-27950 Saint Marcel (FR); CHEMLA, Guillaume, F-78000 Versailles (FR); EVEN, Philippe, F-27620 Sainte Genevieve les Gasny (FR); MILLON, Frédérick, F-27950 Saint Marcel (FR); COLLONGEAT, Laurent, F-77173 Chevry-Cossygny (FR)
(74) Mandataire: Cabinet Beau de Loménie
(86) Numéro de dépôt international: PCT/FR2014/051119
(87) Numéro de publication internationale: WO 2014/188109

(56) Documents cités:
- EP-A1- 0 222 262
- EP-A2- 1 672 270
- FR-A1- 2 964 425
- FR-A1- 2 967 725
- US-A- 2 839 005
- US-A- 3 237 401
- US-B2- 6 991 235

## Description

### Arrière-plan de l'invention

L'invention se rapporte à une turbopompe comportant une turbine alimentée en gaz chauds, une pompe entraînée par la turbine et alimentée en fluide liquide, et une conduite d'évacuation des gaz chauds située en aval de la turbine.

De telles turbopompes sont connues, par exemple, pour alimenter en ergol la chambre à combustion d'un moteur-fusée.

Par exemple, le document EP 1672270 au nom de la demanderesse présente une turbopompe selon le préambule de la revendication 1.

La turbine entraîne la pompe (ou plus précisément la partie rotor de cette pompe) à des vitesses qui peuvent être très élevées et atteindre plusieurs milliers de tours par minutes. Par conséquent, les éléments constitutifs de la turbopompe sont soumis à des contraintes élevées et à des vibrations. Dans certains cas, les fréquences de ces vibrations peuvent correspondre à des modes propres de certains éléments de la turbopompe, en particulier de certaines pièces de la turbine, ce qui peut provoquer l'endommagement des pièces concernées. Ces vibrations ont un impact négatif sur le fonctionnement de la turbopompe et sur sa durée de vie.

On a en particulier constaté que des vibrations importantes concernent les pièces amont de la turbine (premier disque de la turbine, proche de la pompe). Si ces vibrations ne sont pas suffisamment amorties, le phénomène vibratoire peut prendre de l'ampleur, entrainant de ce fait un endommagement important du premier disque de la turbine, voire une destruction de la turbine.

### Objet et résumé de l'invention

L'invention vise à limiter les vibrations qui se produisent dans la turbopompe, en particulier les vibrations qui affectent les pièces amont de la turbine, proches de la pompe.

Ce but est atteint grâce au fait que la turbopompe précitée comprend un carter, une turbine alimentée en gaz chauds, une pompe entraînée par la turbine via un arbre et alimentée en fluide liquide, et une conduite d'évacuation des gaz chauds située en aval de la turbine, selon la revendication 1.

Des recherches ont permis de mieux comprendre l'origine des vibrations qui affectent les pièces amont de la turbine. Pour la clarté des explications qui suivent, on considérera que ces pièces amont sont principalement formées par le premier disque de la turbine.

En effet, même si un soin particulier est apporté à la liaison entre la pompe et la turbine, notamment en termes d'étanchéité, de petites fuites de fluide liquide pompé se produisent, de sorte que de faibles quantités de fluide liquide provenant de la pompe parviennent dans la partie amont du carter de la turbine, en particulier dans la région du premier disque de la turbine.

On a mis en évidence une interaction entre ce fluide provenant de la pompe et le premier disque de la turbine. En effet, un couplage énergétique se met en place entre ce fluide qui provient de la pompe dans lequel se développent des pulsations de pression, et le premier disque qui, sous l'effet de ces pulsations de pression, se met à vibrer selon l'un de ses modes propres. En l'absence d'amortissement suffisant, ce phénomène vibratoire peut prendre de l'ampleur, entrainant de ce fait un endommagement important du disque, voire une destruction de la turbine. L'invention permet de limiter ces vibrations et d'éviter ainsi un endommagement de la turbine.

En effet, des essais ont montré qu'en modifiant les conditions thermodynamiques (débit, température) du fluide provenant de la pompe et entrant dans la partie amont du carter de la pompe, il est possible de réduire l'amplitude du phénomène vibratoire.

Les inventeurs ont eu l'idée de prélever du fluide liquide en sortie de la pompe et de volontairement l'injecter à l'interface entre la pompe et la turbine après l'avoir réchauffé. Ainsi, le fluide liquide prélevé et chauffé est injecté sous forme gazeuse à l'interface entre la pompe et la turbine pour se mélanger à cet endroit avec le fluide liquide de fuite, de manière à faire entrer dans le carter de la turbine un fluide plus chaud, ce qui a pour effet de réduire significativement, voire d'annuler, le phénomène d'interaction entre le fluide provenant de la pompe et le premier disque de la turbine à l'origine des vibrations du premier disque de la turbine, tel qu'évoqué plus haut.

L'invention s'applique non seulement au cas où l'ergol est un ergol cryogénique, mais également au cas où l'ergol est non cryogénique. En effet, dans l'un ou l'autre cas, la modification de température du fluide de fuite, due au mélange avec le fluide réchauffé modifie les conditions thermodynamique du fluide dans le sens souhaité.

Selon l'invention, l'injection du fluide gazeux se fait via un système d'étanchéité dynamique qui se trouve dans la région d'interface située entre la pompe et la turbine.

Le système d'étanchéité doit être dynamique car il est monté sur un arbre rotatif - cet arbre est commun entre la turbine et la pompe - pour assurer l'étanchéité entre l'environnement chaud dans lequel le fluide est gazeux (côté turbine) et l'environnement cryogénique dans lequel le fluide est liquide (côté pompe).

Le système d'étanchéité dynamique est situé dans la région d'interface entre la pompe et la turbine.

Le rotor de la pompe est entrainé en rotation par la turbine afin de pomper l'ergol pour l'injecter dans la chambre de combustion d'un moteur-fusée. Dans le contexte de l'invention, comme souvent dans le domaine de la propulsion spatiale, le fluide utilisé en tant qu'ergol cryogénique est l'hydrogène liquide.

Ainsi, avantageusement, la turbine est alimentée en gaz chauds et la pompe, en hydrogène liquide.

Selon l'invention, le circuit de prélèvement-injection comprend une conduite de prélèvement s'étendant entre la sortie de la pompe et l'entrée d'un échangeur thermique coopérant avec la conduite d'évacuation et une conduite d'injection s'étendant entre la sortie de l'échangeur thermique et la région d'interface, en particulier entre la sortie de l'échangeur thermique et le système d'étanchéité dynamique.

Avantageusement, l'échangeur comprend une chambre de circulation de fluide dont une paroi est située dans la conduite d'évacuation des gaz chauds.

Ceci permet, pour réchauffer le liquide prélevé, d'utiliser l'énergie thermique déjà disponible dans les gaz chauds évacués par la turbopompe.

Avantageusement, la chambre de circulation est en serpentin.

Un serpentin en offre une importante surface de contact avec les gaz chauds évacués dans la conduite dans laquelle il est situé.

Avantageusement, le circuit de prélèvement-injection comporte des moyens pour contrôler la circulation de fluide liquide dans la conduite de prélèvement.

Par ce contrôle, qui peut prendre la forme d'un réglage de pression et/ou de débit défini à l'issue d'essais, on prélève la quantité de fluide nécessaire et suffisante pour obtenir la diminution souhaitée des vibrations.

Avantageusement les moyens pour contrôler la circulation de fluide liquide dans la conduite de prélèvement comprennent des moyens pour régler la pression de fluide.

Avantageusement, le circuit de prélèvement-injection comporte une conduite de bipasse de l'échangeur thermique entre la conduite de prélèvement et la conduite d'injection et des moyens pour répartir le fluide liquide entre la conduite de bipasse et l'échangeur thermique.

Il est particulièrement intéressant de contrôler la température du fluide gazeux qui sera injecté dans la région d'interface entre la pompe et la turbine. Ce contrôle de la température du fluide gazeux est assuré par la conduite de bipasse. Cette conduite de bipasse permet de piquer de l'ergol liquide avant son injection dans l'échangeur de chaleur pour le réinjecter à la sortie de cet échangeur et ainsi conduire à son mélange avec le fluide vaporisé dans l'échangeur de chaleur et dont la température, si elle est trop élevée, baisse au contact de ce fluide liquide.

Avantageusement, les moyens pour répartir le fluide liquide comprennent une restriction réglable sur au moins l'un des éléments constitués par la conduite de bipasse et un tronçon de la conduite de prélèvement qui s'étend entre la conduite de bipasse et l'échangeur.

La restriction réglable permet d'adapter la quantité de fluide liquide transformé en fluide gazeux en sortie de l'échangeur de chaleur et ainsi de contrôler la température du fluide gazeux issu du mélange entre le fluide gazeux provenant de l'échangeur thermique et le fluide liquide issu de la conduite de bipasse, qui sera ensuite injecté dans système d'étanchéité dynamique ; ceci en tenant compte de la température des gaz chauds dans la conduite d'échappement et de la capacité de l'échangeur.

Avantageusement le circuit de prélèvement-injection comporte des moyens pour régler le débit dans la conduite d'injection.

Selon l'invention, la turbopompe comporte un circuit de circulation et d'alimentation en hélium pour injecter de l'hélium dans au moins l'un des éléments constitués par la pompe et par la turbine, l'injection d'hélium se faisant via le système d'étanchéité dynamique.

Le circuit de circulation d'hélium sert à assurer l'étanchéité de la pompe lors de la mise en froid du moteur et de la turbopompe avant l'allumage du moteur. Grâce à la disposition précitée, une partie de ce circuit est mise à profit pour réaliser l'injection de fluide gazeux anti-vibration.

L'utilisation de ce système de circulation d'hélium préexistant présente l'avantage de ne pas avoir à intégrer un système de circulation supplémentaire pour la circulation puis pour l'injection du fluide gazeux dans la région d'interface de la turbopompe située entre la pompe et la turbine, en particulier via le système d'étanchéité dynamique.

### Brève description des dessins

D'autres caractéristiques et avantages de l'invention apparaîtront à la lecture de la description qui suit d'un mode de réalisation préféré de l'invention, donnée à titre d'exemple et en référence aux dessins annexés.
La figure 1 est une vue en coupe d'une turbopompe classique (dont l'ensemble a été simplifié pour faciliter la compréhension de l'invention).
La figure 2 est une vue en coupe de cette même turbopompe munie du système de recirculation de fluide selon un mode de réalisation de l'invention.
La figure 3 est une vue de détail de la région d'interface entre la pompe et la turbine de la turbopompe, montrant la zone dans laquelle, selon l'invention, le fluide gazeux issu du fluide prélevé est injecté.
La figure 4 est une représentation schématique d'un échangeur de chaleur selon un mode de réalisation de l'invention.

### Description détaillée de l'invention

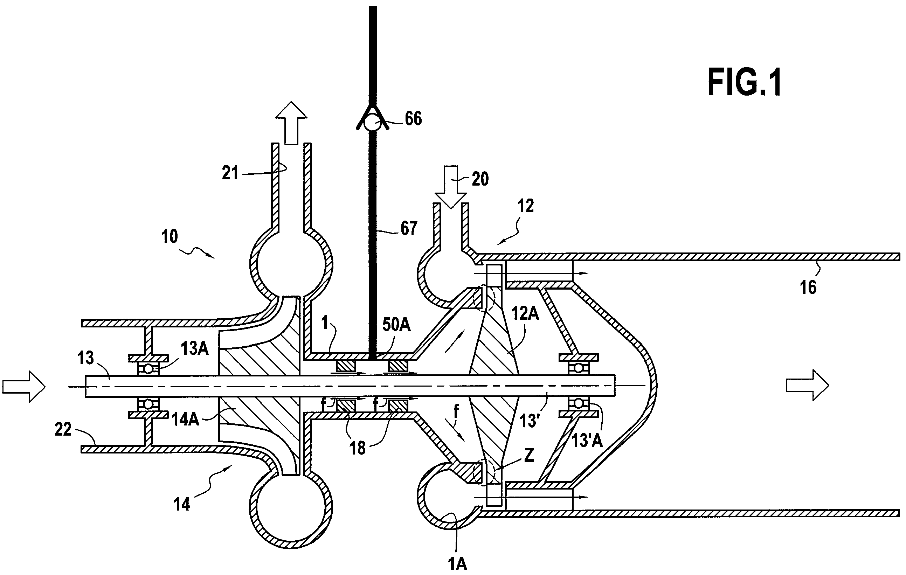

La figure 1 montre une vue simplifiée d'une turbopompe 10 comportant au moins une pompe 14 et une turbine 12 reliées par un arbre rotatif commun 13, 13'. Ce type de turbopompes 10 est utilisé notamment dans les moteurs-fusées à ergols liquides, afin d'amener les ergols à la pression d'injection des ergols dans une chambre de combustion desdits moteurs. De manière très schématique, on a représenté le rotor 14A de la pompe 14 et les disques rotatifs 12A de la turbine 12. On a indiqué par la référence 1 le carter de la turbopompe, qui comprend une partie de carter de pompe et une partie de carter de turbine.

La rotation de la turbine 12, provoque celle de l'arbre 13,13', ce qui entraîne en rotation le rotor de la pompe 14, pour pomper un liquide à partir d'une alimentation 22. Par exemple, la turbine 12 est entraînée par un générateur de gaz embarqué dans le moteur-fusée. C'est le cas des turbopompes dont la turbine est actionnée par la détente des gaz chauds 20 générés par le générateur de gaz.

Cependant, la turbine 12 de ce type de turbopompe peut aussi être à cycle expandeur. C'est le cas des turbopompes dont la turbine est actionnée par la détente d'un ergol à l'état gazeux après son réchauffement en paroi de la chambre de combustion.

Les gaz chauds 20 qui ont entraîné la rotation de la turbine 12 sont évacués par une conduite d'évacuation des gaz chauds 16. Le gaz chaud qui entraîne la rotation de la turbine est, par exemple, de l'hydrogène gazeux (cycle expandeur) ou un mélange d'hydrogène gazeux et de vapeur d'eau (cycle générateur de gaz).

Le fluide liquide pompé est par exemple un ergol, en particulier de l'hydrogène liquide, que la pompe 14 amène à pression à sa sortie 21, pour injecter cet ergol dans une chambre de combustion d'un moteur (non représenté) associé à la turbopompe.

L'étanchéité entre l'environnement de la turbine 12, chaud et gazeux, et celui de la pompe 14, cryogénique et liquide, est assurée par un système d'étanchéité dynamique 18 coopérant, d'une part, avec l'arbre 13,13' et, d'autre part, avec le carter 1 de la turbopompe. Malgré cette étanchéité, un léger écoulement d'hydrogène liquide de fuite est susceptible de passer de l'environnement pompe 14 à l'environnement turbine 12, comme indiqué par les flèches f. Ce liquide de fuite parvient dans la partie de carter de turbine en amont du premier disque de turbine. Il se mélange ainsi, dans la zone Z indiquée sur la figure 1, avec les gaz chauds qui sortent de la cavité amont 1A de la turbine.

Des paliers 13A, 13'A supportent la rotation de l'arbre 13,13' par rapport au carter 1 de la turbopompe.

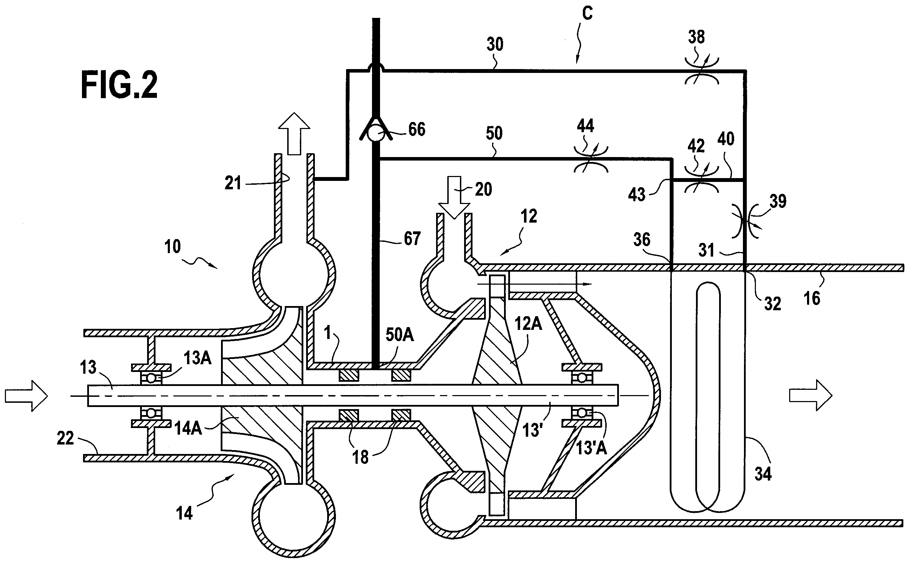

On décrit maintenant un mode de réalisation de l'invention, en référence à la figure 2.

Pour la description qui suit, on prend l'exemple d'un mélange de gaz chauds hydrogène/vapeur d'eau comme fluide circulant dans la turbopompe pour faire tourner la turbine et d'hydrogène sous forme liquide, comme fluide liquide pompé. Cependant d'autres types de fluides peuvent être envisagés par exemple, selon le type d'ergol concerné.

Selon l'invention, ainsi que le montre la figure 2, un circuit de prélèvement-injection C est ajouté à la turbopompe de la figure 1. Ce circuit comprend des moyens de prélèvement 30, comprenant dans le mode de réalisation représenté une conduite de prélèvement 30 qui prélève de l'hydrogène liquide à la sortie 21 de la pompe 14. Cet hydrogène liquide est à une pression de sortie élevée, par exemple d'environ 185bars. Le fluide prélevé par cette conduite de prélèvement 30 parvient sous forme liquide à l'entrée 32 d'un échangeur thermique 34 et ressort en 36 de cet échangeur thermique sous forme gazeuse. La sortie 36 de l'échangeur thermique 34 est reliée à une conduite d'injection 50 qui débouche sur le système d'étanchéité dynamique 18 situé à l'interface entre la pompe 14 et la turbine 12. En l'espèce, le système d'étanchéité dynamique comprend deux joints espacés axialement dans la direction longitudinale de l'arbre 13,13', et l'injection s'opère entre ces deux joints.

En l'espèce, l'échangeur thermique 34 coopère avec la conduite 16 d'évacuation des gaz chauds, de manière à pouvoir être chauffé par les gaz provenant de l'échappement de la turbine. Plus précisément, l'échangeur thermique 34 est situé dans un tronçon de la conduite 16.

La température de l'hydrogène liquide en entrée de l'échangeur est par exemple de l'ordre de 40K. A la sortie de l'échangeur thermique 36, l'hydrogène est gazeux du fait du chauffage réalisé dans l'échangeur thermique.

Dans l'exemple représenté, un moyen de réglage de pression 38 est situé sur la conduite de prélèvement 30 de l'hydrogène liquide. Ce moyen de réglage de la pression 38, par exemple une restriction à section variable, permet de diminuer la pression de l'hydrogène liquide qui circule dans la conduite 30 pour l'amener, par exemple, à une pression d'environ 110bars en aval de cette restriction.

On pourrait prévoir que l'intégralité de l'hydrogène liquide en aval du moyen de réglage de pression 38 parvienne à l'entrée de l'échangeur thermique. Toutefois, dans l'exemple représenté, une conduite de bipasse 40 permet de bipasser l'échangeur thermique 34 pour qu'une partie du fluide prélevé puisse passer directement de la conduite de prélèvement 30 à la conduite d'injection 50. Dans ce cas, seule une partie de l'hydrogène liquide à la pression réduite est injectée dans l'échangeur thermique 34 pour être chauffée, tandis que l'autre partie passe directement dans la conduite d'injection 50 sans être chauffée. On comprend que les proportions relatives d'hydrogène chauffé et d'hydrogène non chauffé conditionnent la température du fluide gazeux, issu de leur mélange et injecté dans la région du système d'étanchéité dynamique 18.

Pour régler ces proportions, le circuit de prélèvement et d'injection du fluide comprend des moyens pour répartir l'hydrogène liquide entre l'échangeur thermique et la conduite de bipasse. Ces moyens peuvent comprendre un répartiteur de débit entre la conduite de bipasse 40 et le tronçon 31 de la conduite de prélèvement 30 qui s'étend entre la conduite de bipasse 40 et l'entrée 32 de l'échangeur thermique. Ils peuvent simplement comprendre un limiteur de débit situé sur la conduite de bipasse 40 ou sur le tronçon 31. Dans l'exemple représenté, un moyen de réglage du débit 39 de type restriction à section réglable est prévu sur le tronçon 31, et un moyen de réglage du débit 42 de type restriction à section réglable est prévu sur la conduite de bipasse 40.

Par la restriction réglable 38, on règle la pression en entrée du dispositif de réchauffage. Par les restrictions 39 et 42, on règle la proportion de ce fluide qui est chauffée et vaporisée dans l'échangeur thermique, par rapport à la proportion qui reste liquide et froid, ce qui permet de régler la température du fluide injecté par la conduite 50, par exemple pour obtenir une température de l'ordre de 300K. Dans tous les cas, ces proportions sont telles que le fluide qui sort de la conduite 50 est sous forme gazeuse.

Dans l'exemple représenté, la conduite d'injection 50 comporte aussi un moyen 44 pour régler le débit d'injection de l'hydrogène gazeux, par exemple une restriction à section réglable. Ce moyen de réglage est situé dans la partie aval de la conduite 50, en aval du nœud de raccordement 43 entre la conduite de bipasse 40 et la sortie de l'échangeur thermique. Par exemple, on fait ainsi en sorte que l'hydrogène gazeux soit injecté dans le système d'étanchéité dynamique 18 avec un débit d'environ 7g/s.

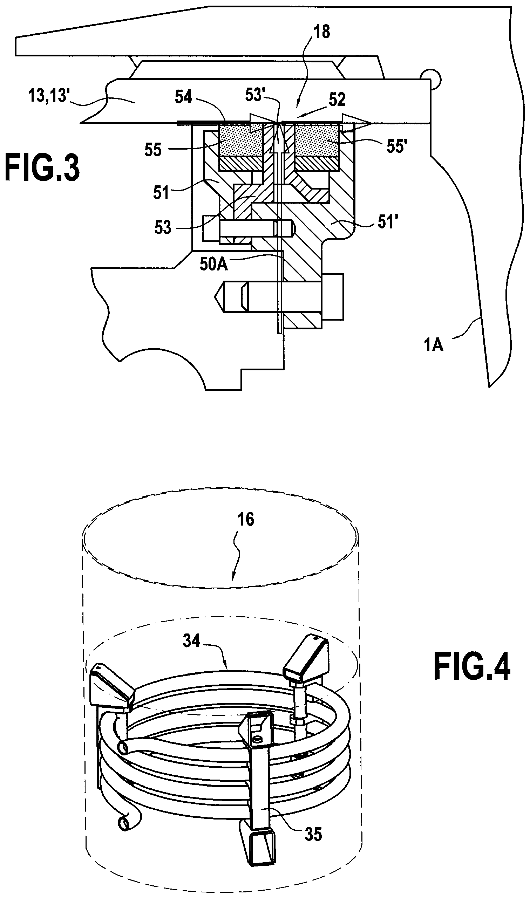

La figure 3 montre le système d'étanchéité dynamique 18 en détail.

Sur cette figure, on a schématisé l'emplacement de l'extrémité 50A de conduite d'injection 50 précédemment décrite en référence à la figure 2. Comme on le voit, cette extrémité 50A débouche dans la région du système d'étanchéité dynamique 18 pour injecter l'hydrogène gazeux à cet endroit. Plus particulièrement, l'injection en sortie de l'extrémité 50A s'opère en un emplacement appelé inter-bagues 52 du système d'étanchéité dynamique 18. Cet inter-bagues 52 est situé entre 2 joints d'étanchéité, respectivement 55 et 55', maintenus par 2 brides, respectivement 51 et 51', et une entretoise 53. L'hydrogène gazeux issu de la conduite d'injection 50 est injecté entre les deux joints 55/55' au moyen de trous 53' percés radialement dans l'entretoise 53.

Un léger écoulement d'hydrogène liquide 54 de fuite provient de l'environnement de la pompe et s'écoule vers l'environnement de la turbine.

Ce léger écoulement d'hydrogène liquide 54 est vaporisé, au fur et à mesure qu'il parvient au contact de l'hydrogène gazeux. Ainsi, la totalité du fluide de fuite est vaporisée.

Le mélange entre le fluide liquide de fuite et le fluide gazeux injecté à l'inter-bagues 52 se fait dans la région aval de l'inter-bagues 52, dans le sens de l'écoulement du fluide gazeux injecté par la conduite 50. En l'espèce, le mélange se fait dans le jeu entre l'entretoise 53 et l'arbre 13,13'. La pression d'injection de l'hydrogène gazeux à l'inter-bagues 52 est de l'ordre de 35bars, par exemple.

La figure 4 est une vue schématique de l'échangeur de chaleur 34 situé dans la conduite d'échappement des gaz chauds 16. Cet échangeur de chaleur 34 est maintenu, de préférence, par des attaches 35 résistantes à la dilatation thermique.

Cet échangeur 34 présente une forme de serpentin. Il peut adopter d'autres formes adaptées à cet échange de chaleur.

Toutefois, lorsque cet échangeur 34 adopte la forme d'un serpentin, celui-ci présente, par exemple, une épaisseur de l'ordre de 1mm et il est enroulé sur lui-même de façon hélicoïdale, en formant plusieurs spires.

La température est habituellement comprise entre environ 600K et environ 700K à l'intérieur de la conduite d'évacuation 16 des gaz chauds.

La conduite d'injection 50 utilise en partie un circuit de circulation d'hélium dans la turbopompe. En effet, dans l'exemple représenté, la turbopompe comporte une alimentation en hélium raccordée au système d'étanchéité dynamique 18 qui assure l'étanchéité de la pompe lors de la phase précédant l'allumage du moteur que la turbopompe 10 sert à alimenter ; cette phase est connue sous le nom de phase de mise en froid moteur. Aucune fuite d'ergol n'est admise pendant cette phase entre la pompe 14 et la turbine 12.

Comme on le voit sur la figure 2, la conduite d'injection 50 comprend le tronçon terminal 67 de la conduite d'alimentation du système d'étanchéité dynamique en hélium. Ainsi, une partie du circuit de circulation de l'hélium est mise à profit pour réaliser une partie du circuit de prélèvement-injection selon l'invention. Il est à noter que le tronçon 67 est équipé d'un clapet anti-retour 66 qui est situé en amont de son raccordement à la conduite d'injection 50 et empêche l'hydrogène venant de la conduite 50 de remonter dans le circuit d'arrivée d'hélium.

L'hydrogène gazeux est introduit dans le circuit d'alimentation en hélium de la turbopompe 10 après l'allumage de son moteur, lorsque la pression en sortie de la pompe atteint une valeur suffisante. L'hélium et l'hydrogène gazeux se côtoient donc dans le même circuit pendant quelques secondes. Une fois ce temps passé, seul l'hydrogène gazeux circule dans le tronçon 67.

Il est à noter que des parties flexibles peuvent être prévues sur les conduites précédemment décrites (en particulier la conduite de prélèvement 30 et la conduite d'injection 50) afin d'absorber les mouvements relatifs de ces conduites 30, 50 au sein de la turbopompe 10.

## Revendications

1. Turbopompe (10), comportant un carter (1), une turbine (12) alimentée en gaz chauds (20), une pompe (14) entraînée par la turbine (12) via un arbre (13, 13') et alimentée en fluide liquide, et une conduite d'évacuation des gaz chauds (16) située en aval de la turbine (12), ladite turbopompe (10) comprenant un circuit de prélèvement-injection comprenant des moyens de prélèvement adaptés pour prélever du fluide liquide en sortie (21) de la pompe (14), un échangeur thermique (34) coopérant avec la conduite d'évacuation des gaz chauds (16) et adapté pour réchauffer ce fluide liquide ainsi prélevé de manière à le transformer en fluide gazeux et des moyens d'injection adaptés pour injecter ce fluide gazeux dans une région d'interface de la turbopompe située entre la pompe (14) et la turbine (12), dans laquelle l'injection du fluide gazeux se fait via un système d'étanchéité dynamique (18) coopérant, d'une part, avec l'arbre (13,13') et, d'autre part, avec le carter (1) de la turbopompe, et qui se trouve dans la région d'interface située entre la pompe (14) et la turbine (12), le système d'étanchéité dynamique (18) comprenant deux joints (55, 55') espacés axialement dans la direction longitudinale de l'arbre (13, 13'), et dans laquelle une entrée (32) de l'échangeur thermique (34) est reliée à une conduite de prélèvement (30), et une sortie (36) de l'échangeur thermique (34) est reliée à une conduite d'injection (50) qui débouche sur le système d'étanchéité dynamique (18) entre les deux joints (55, 55') du système d'étanchéité dynamique (18), la conduite de prélèvement (30) s'étendant entre la sortie (21) de la pompe (14) et l'entrée (32) de l'échangeur thermique (34) et la conduite d'injection (50) s'étendant entre la sortie (36) de l'échangeur thermique (34) et la région d'interface, la turbopompe (10) étant **caractérisée en ce qu'**elle comporte un circuit de circulation en hélium pour injecter de l'hélium dans la pompe (14) et/ou la turbine (12), et **en ce que** l'injection d'hélium se fait via une conduite d'alimentation en hélium et le système d'étanchéité dynamique (18), la conduite d'injection (50) utilisant en partie la conduite d'alimentation en hélium dans la turbopompe pour réaliser l'injection du fluide gazeux.

2. Turbopompe (10) selon la revendication 1, **caractérisée en ce que** la turbine (12) est alimentée en gaz chauds et la pompe (14) est alimentée en hydrogène liquide.

3. Turbopompe (10) selon l'une des revendications 1 ou 2, **caractérisée en ce que** l'échangeur thermique (34) comprend une chambre de circulation de fluide dont une paroi est située dans la conduite d'évacuation des gaz chauds (16).

4. Turbopompe (10) selon la revendication 3, **caractérisée en ce que** la chambre de circulation (34) est en serpentin.

5. Turbopompe (10) selon l'une quelconque des revendications 1 à 4, **caractérisée en ce que** le circuit de prélèvement-injection comporte des moyens (38) pour contrôler la circulation du fluide liquide dans la conduite de prélèvement (30).

6. Turbopompe (10) selon la revendication 5, **caractérisée en ce que** les moyens pour contrôler la circulation de fluide liquide dans la conduite de prélèvement (30) comprennent des moyens (38) pour régler la pression de fluide.

7. Turbopompe (10) selon l'une quelconque des revendications 1 à 6, **caractérisée en ce que** le circuit de prélèvement-injection comporte une conduite de bipasse (40) de l'échangeur thermique (34) entre la conduite de prélèvement (30) et la conduite d'injection (50) et des moyens (39,42) pour répartir le fluide liquide entre la conduite de bipasse (40) et l'échangeur thermique (34).

8. Turbopompe (10) selon la revendication 7, **caractérisé en ce que** les moyens pour répartir le fluide liquide comprennent une restriction réglable (39,42) sur au moins l'un des éléments constitués par la conduite de bipasse (40) et un tronçon (31) de la conduite de prélèvement (30) qui s'étend entre la conduite de bipasse (40) et l'échangeur (34).

9. Turbopompe (10) selon l'une quelconque des revendications 1 à 8, **caractérisée en ce que** le circuit de prélèvement-injection comporte des moyens (44) pour régler le débit dans la conduite d'injection (50).

## Patentansprüche

1. Turbopumpe (10), die ein Gehäuse (1), eine Turbine (12), der heiße Gase (20) zugeführt werden, eine Pumpe (14), die durch die Turbine (12) über eine Welle (13, 13') angetrieben wird und der flüssiges Fluid zugeführt wird, und eine Heißgas-Abführleitung (16), die sich stromabwärts der Turbine (12) befindet, beinhaltet, wobei die Turbopumpe (10) einen Entnahme-/Einspritzkreis umfasst, der Entnahmemittel, die dazu ausgestaltet sind, flüssiges Fluid an einem Auslass (21) der Pumpe (14) zu entnehmen, einen Wärmetauscher (34), der mit der Heißgas-Abführleitung (16) zusammenwirkt und dazu ausgestaltet ist, das derart entnommene flüssige Fluid zu erwärmen, um es in gasförmiges Fluid umzuwandeln, und Einspritzmittel umfasst, die dazu ausgestaltet sind, das gasförmige Fluid in einen Grenzflächenbereich der Turbopumpe einzuspritzen, der zwischen der Pumpe (14) und der Turbine (12) angeordnet ist, wobei die Einspritzung des gasförmigen Fluids über ein dynamisches Dichtsystem (18) erfolgt, das einerseits mit der Welle (13, 13') und andererseits mit dem Gehäuse (1) der Turbopumpe zusammenwirkt und das sich in dem Grenzflächenbereich befindet, der zwischen der Pumpe (14) und der Turbine (12) angeordnet ist, wobei das dynamische Dichtsystem (18) zwei Dichtungen (55, 55') umfasst, die axial in der Längsrichtung der Welle (13, 13') beabstandet sind, und wobei ein Einlass (32) des Wärmetauschers (34) mit einer Entnahmeleitung (30) verbunden ist und ein Auslass (36) des Wärmetauschers (34) mit einer Einspritzleitung (50) verbunden ist, die in das dynamische Dichtsystem (18) zwischen den zwei Dichtungen (55, 55') des dynamischen Dichtsystems (18) mündet, wobei sich die Entnahmeleitung (30) zwischen dem Auslass (21) der Pumpe (14) und dem Einlass (32) des Wärmetauschers (34) erstreckt und sich die Einspritzleitung (50) zwischen dem Auslass (36) des Wärmetauschers (34) und dem Grenzflächenbereich erstreckt, wobei die Turbopumpe (10) **dadurch gekennzeichnet ist, dass** sie eine Helium-Umwälzleitung zum Einspritzen von Helium in die Pumpe (14) und/oder die Turbine (12) beinhaltet und dass die Einspritzung des Heliums über eine Helium-Zuführleitung und das dynamische Dichtsystem (18) erfolgt, wobei die Einspritzleitung (50) einen Teil der Helium-Zuführleitung in der Turbopumpe zum Durchführen der Einspritzung des gasförmigen Fluids verwendet.

2. Turbopumpe (10) nach Anspruch 1, **dadurch gekennzeichnet, dass** der Turbine (12) heiße Gase zugeführt werden und der Pumpe (14) flüssiger Wasserstoff zugeführt wird.

3. Turbopumpe (10) nach einem der Ansprüche 1 oder 2, **dadurch gekennzeichnet, dass** der Wärmetauscher (34) eine Fluidumwälzkammer umfasst, von der eine Wand in der Heißgas-Abführleitung (16) angeordnet ist.

4. Turbopumpe (10) nach Anspruch 3, **dadurch gekennzeichnet, dass** die Umwälzkammer (34) schlangenförmig ist.

5. Turbopumpe (10) nach einem der Ansprüche 1 bis 4, **dadurch gekennzeichnet, dass** der Entnahme-/Einspritzkreis Mittel (38) zum Steuern der Umwälzung des flüssigen Fluids in der Entnahmeleitung (30) beinhaltet.

6. Turbopumpe (10) nach Anspruch 5, **dadurch gekennzeichnet, dass** die Mittel zum Steuern der Umwälzung von flüssigem Fluid in der Entnahmeleitung (30) Mittel (38) zum Regeln des Fluiddrucks umfassen.

7. Turbopumpe (10) nach einem der Ansprüche 1 bis 6, **dadurch gekennzeichnet, dass** der Entnahme-/Einspritzkreis eine Umgehungsleitung (40) des Wärmetauschers (34) zwischen der Entnahmeleitung (30) und der Einspritzleitung (50) und Mittel (39, 42) zum Verteilen des flüssigen Fluids zwischen der Umgehungsleitung (40) und dem Wärmetauscher (34) beinhaltet.

8. Turbopumpe (10) nach Anspruch 7, **dadurch gekennzeichnet, dass** die Mittel zum Verteilen des flüssigen Fluids eine regelbare Verengung (39, 42) an mindestens einem der Elemente umfassen, die durch die Umgehungsleitung (40) und ein Teilstück (31) der Entnahmeleitung (30), das sich zwischen der Umgehungsleitung (40) und dem Tauscher (34) erstreckt, gebildet sind.

9. Turbopumpe (10) nach einem der Ansprüche 1 bis 8, **dadurch gekennzeichnet, dass** der Entnahme-/Einspritzkreis Mittel (44) zum Regeln des Durchsatzes in der Einspritzleitung (50) beinhaltet.

## Claims

1. A turbopump (10), comprising a casing (1), a turbine (12) fed with hot gas (20), a pump (14) driven by the turbine (12) via a shaft (13, 13') and fed with liquid fluid, and a hot gas exhaust pipe (16) situated downstream from the turbine (12), the turbopump (10) including a bleed-and-injection circuit comprising bleed means adapted to bleed the liquid fluid at the outlet (21) from the pump (14), a heat exchanger (34) cooperating with the hot gas exhaust pipe (16) and adapted to heat the liquid fluid (34) as bled off in this way so as to transform it into gaseous fluid, and injector means adapted to inject the gaseous fluid into an interface region of the turbopump situated between the pump (14) and the turbine (12), and wherein the gaseous fluid is injected via a dynamic sealing system (18) that co-operates firstly with the shaft (13, 13') and secondly with the casing (1) of the turbopump, which sealing system is located in the interface region situated between the pump (14) and the turbine (12), .
the dynamic sealing system (18) comprising two sealing gaskets (55, 55') spaced axially along the longitudinal direction of the shaft (13, 13'), and wherein an inlet (32) of the heat exchanger (34) is connected to a bleed pipe (30), and an outlet (36) from the heat exchanger (34) is connected to an injection pipe (50) that leads into the dynamic sealing system (18) between the two sealing gaskets (55, 55') of the dynamic sealing system (18), the bleed pipe (30) extends between the outlet (21) of the pump (14) and the inlet (32) of the heat exchanger (34) and the injection pipe (50) extending between the outlet (36) from the heat exchanger (34) and the interface region,
the turbopump (10) being **characterized in that** it includes a helium flow circuit for injecting helium into at least one of the elements constituted by the pump (14) and by the turbine (12), and **in that in that** helium is injected via a helium injection pipe and the dynamic sealing system (18), the injection pipe (50) using part of the helium injection pipe in the turbopump to inject gaseous fluid.

2. A turbopump (10) according to claim 1, **characterized in that** the turbine (12) is fed with hot gas and the pump (14) is fed with liquid hydrogen.

3. A turbopump (10) according to any one of claims 1 or 2, **characterized in that** the heat exchanger (34) comprises a fluid flow chamber with a wall situated in the hot gas exhaust pipe (16).

4. A turbopump (10) according to claim 3, **characterized in that** the flow chamber (34) is coil shaped.

5. A turbopump (10) according to any one of claims 2 to 4, **characterized in that** the bleed-and-injection circuit includes means (38) for controlling the flow of the liquid fluid in the bleed pipe (30).

6. A turbopump (10) according to claim 5, **characterized in that** the means for controlling the flow of liquid fluid in the bleed pipe (30) comprise means (38) for adjusting the fluid pressure.

7. A turbopump (10) according to any one of claims 1 to 6, **characterized in that** the bleed-and-injection circuit includes a bypass pipe (40) for bypassing the heat exchanger (34) between the bleed pipe (30) and the injection pipe (50), and means (39, 42) for sharing the liquid fluid between the bypass pipe (40) and the heat exchanger (34).

8. A turbopump (10) according to claim 7, **characterized in that** the means for sharing the liquid fluid comprises an adjustable constriction (39, 42) on at least one of the elements constituted by the bypass pipe (40) and a segment (31) of the bleed pipe (30) that extends between the bypass pipe (40) and the heat exchanger (34).

9. A turbopump (10) according to any one of claims 1 to 8, **characterized in that** the bleed-and-injection circuit includes means (44) for adjusting flow rate in the injection pipe (50).
